**Europäisches Patentamt**

**European Patent Office**

**Office européen des brevets**

(19)

(11) Veröffentlichungsnummer: **0 003 276**
**B1**

(12) **EUROPÄISCHE PATENTSCHRIFT**

(45) Veröffentlichungstag der Patentschrift: **14.10.81**

(21) Anmeldenummer: **79100013.6**

(22) Anmeldetag: **03.01.79**

(51) Int. Cl.³: **C 03 C 15/00, H 01 J 65/04**

(54) **Verfahren und Vorrichtung zur Herstellung von Durchbrüchen (Löchern) in Glasplatten, vorzugsweise mit feinsten Strukturen.**

(30) Priorität: **24.01.78 DE 2802976**

(43) Veröffentlichungstag der Anmeldung:
**08.08.79 Patentblatt 79/16**

(45) Bekanntmachung des Hinweises auf die Patenterteilung:
**14.10.81 Patentblatt 81/41**

(84) Benannte Vertragsstaaten:
**FR GB IT NL**

(56) Entgegenhaltungen:
**CH - A - 262 221**
**DE - A - 1 803 213**
**US - A - 2 879 147**

(73) Patentinhaber: **SIEMENS AKTIENGESELLSCHAFT**
**Berlin und München**
**Postfach 22 02 61**
**D-8000 München 22 (DE)**

(72) Erfinder: **Weingand, Kaspar**
**Mooshölzlweg 1**
**D-8184 Dürnbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## 0 003 276

Verfahren und Vorrichtung zur Herstellung von Durchbrüchen (Löchern) in Glasplatten, vorzugsweise mit feinsten Strukturen.

Die Erfindung betrifft ein Verfahren zur Herstellung von Durchbrüchen (Löchern) in Glasplatten, vorzugsweise mit feinsten Strukturen, wie sie insbesondere in Gasentladungsanzeigeelementen benötigt werden, insbesondere in solchen mit hohen Bildpunktdichten.

Aus der CH—A—262 221 ist ein Verfahren und eine Vorrichtung zum Ätzen von Glasplättchen und dergleichen Fließarbeit bekannt. Dabei werden die zu ätzenden Glasplättchen mit nach unten gekehrten Ätzstellen in einem geschlossenen Behälter durch die von einer ätzenden Flüssigkeit aufsteigenden Dämpfe hindurchbewegt.

Bei dem in der US—A—2 879 147 beschriebenen Verfahren zum Glasätzen werden die nicht zu ätzenden Stellen ebenso mit einer flußsäureresistenten Abdeckung versehen. Als Ätzmittel wird jedoch eine wäßrige Flußsäurelösung verwendet. Mit der verwendeten 10%igen Flußsäure (Sp. 3, Z. 50 ff) ist jedoch ein günstiger Ätzfaktor (Verhältnis Tiefen- zu Seitenätzung), wie er besonders für die Herstellung von Glaslochplatten mit hoher Lochzahldichte erforderlich ist, nicht erreichbar.

In der DE—A 2 412 869 ist eine Entladungs-Lumineszenz-Anzeigeeinrichtung beschrieben und dargestellt. Nach dem dabei angewandten Verfahren zur Herstellung von Plasma-Displays ist zur Ansteuerung der einzelnen Bildpunkte eine sogenannte Steuerplatte erforderlich. Diese Steuerplatte trennt den Innenraum eines Displays in zwei Berreiche, und zwar einen Plasmaraum und einen Nachbeschleunigungsraum. Die Steuerplatte besteht im Prinzip aus einer gelochten Glasfolie mit matrixförmig angeordneten, die Löcher umschließenden metallischen Leiterbahnen. Die Matrixanordnung bedingt, daß die dem Plasmaraum zugewandten Elektroden horizontal (Zeilenleitungen), die dem Nachbeschleunigungsraum zugewandten vertikal (Spaltenleitungen) verlaufen. Mit dieser Anordnung kann jeder Bildpunkt einzeln angesteuert werden. Auf diese Weise können im Plasmaraum vorhandene Elektronen schaltungsmäßig durch die Glaslochplatte in den Nachbeschleunigungsraum und somit auf den Leuchtschirm gesteuert werden.

Die Anzahl der Löcher in einer Glasfolie richtet sich nach dem jeweiligen Anwendungsfall, und zwar bei Plasma-Displays nach der gewünschten Bildpunktzahl. Entsprechend dem derzeitigen Fernseh-Zeilenraster ergibt sich dabei z. B. bei einer Bildröhrendiagonale von 67 cm für die Löcher der Steuerplatte ein Horizontalraster von 0,32 mm und ein Vertikalraster von 0,64 mm. Da nun die Löcher durch Ätztechnik herzustellen sind, ergeben sich für die Herstellung von Steuerplatten insofern Einschränkungen, als stets bestimmte Verhältnisse von Dicke des Glases, Lochgröße und Lochabstände zu realisieren sind. Aufgrund der Unterätzung der Leiterbahnen beim Glas-Ätzen besteht ansonsten die Gefahr, daß die Leiterbahnen nur noch ungenügend auf dem Glas haften oder bereits beim Ätzprozeß abgeätzt werden. Es besteht somit das Problem, Steuerplatten mit weitgehend vorgegebenen Geometrien so zu ätzen, daß sie allen Ansprüchen genügen.

Der Erfindung liegt die Aufgabe zugrunde, mit einfachen Mitteln ein Verfahren und eine Vorrichtung zum Ätzen von Glaslochplatten, insbesondere mit hohen Lochzahldichten zu schaffen, wobei der Ätzfaktor besonders günstig ausfällt. Unter Ätzfaktor versteht man bekanntlich das Verhältnis von Tiefenätzung zur Seitenätzung.

Diese Aufgabe wird dadurch gelöst, daß die Durchbrüche in die Glasplatte in einer geschlossenen Apparatur (Ätzkammer) in der Gasphase einer konzentrierten Flußsäure geätzt werden, wobei die nicht zu ätzenden Stellen mit einer flußsäureresistenten Abdeckung versehen sind. Der Vorteil dieses Verfahrens besteht darin, daß der Ätzfaktor wesentlich günstiger ist als bei Tauchätz- und Sprühätzverfahren.

Im Gegensatz zu den bekannten Verfahren des Tauch- und Sprühätzens ist das Verhältnis von Tiefenätzung zu Seitenätzung mindestens um den Faktor 2 günstiger. Konnten z. B. nach den bekannten Ätzverfahren bisher Steuerplatten mit den Lochrastermäßaen 0,32 mm bzw. 0,64 mm, bei Lochgrößen von ca. 0,2 mm × 0,5 mm aus einer 0,1 mm dicken Glasfolie hergestellt werden, so ermöglicht das neue Ätzverfahren bei den gleichen Lochabmessungen die Herstellung aus ca. 0,2 mm dicken Glasfolien. Nach dem neuen Atzverfahren lassen sich auch die zur Abstützung der Steuerscheibe im Display erforderlichen Abstands-Lochplatten wesentlich vorteilhafter herstellen.

Falls zum Ätzen der Glaslochplatten Metall, z. B. Kupfer, als Atzresist verwendet wird, ist es bezüglich der Unterätzung besonders vorteilhaft, eine Haftschicht aus Titan zwischen Glasplatte und Kupfer aufzubringen. Beim Ätzen der Löcher in die Glasplatte entwickelt sich bei seitlicher Unterätzung bei der Reaktion zwischen Titan und Flußsäure Wasserstoff, der Flußsäure verdrängt und somit die seitliche Ätzung reduziert. Beim Tauchätz- bzw. Sprühätzverfahren kommt dieser Effekt nicht zum Tragen, da die Reaktionsprodukte rasch genug entfernt werden, um eine Barriere gegen die angreifende Flußsäure aufzubauen.

Bei dem erfindungsgemäßen Verfahren besteht keine Gefahr mehr, daß die nicht zu ätzenden Stellen völlig abgeätzt werden. Mit dieser Lösung wird auch für großflächige Formate ein gleichmäßiges Ätzen erzielt. Außerdem bedingt dieses Verfahren einen geringeren Apparateaufwand gegenüber Tauchverfahren und erfordert auch weniger Spülwasser. Probleme durch Verschmutzung treten ebenfalls nicht auf und die Bruchgefahr wird gegenüber dem üblichen Tauchverfahren wesentlich reduziert.

2

**0 003 276**

Zum Schutz des Metallresists wird nach einer Weiterbildung des Verfahrens nach der Erfindung in die Ätzkammer Schutzgas, z. B. Wasserstoff oder Stickstoff, eingeleitet.

Nach einer weiteren Ausgestaltung des erfindungsgemäßen Verfahrens wird als Ätzresist eine von Flußsäure nicht angreifbare Metallschicht verwendet, wobei zwischen Glasplatte und Resistschicht eine Haftschicht aus Titan vorgesehen ist.

Zur Erleichterung der Ätzkontrolle kann auf den zu ätzenden Glasplatten jeweils eine nicht mit resistentem Belag versehene Testmarke vorgesehen werden.

Zweckmäßigerweise wird die zu ätzende Glasplatte in der geschlossenen, voll oder teilweise durchsichtigen Apparatur, die als Bodenflüssigkeit konzentrierte Flußsäure enthält, der Gasphase ausgesetzt. Mit dieser Vorrichtung wird ein minimaler Verbrauch der Flußsäure erzielt. Außerdem werden Ausschleppverluste, die beim Tauchverfahren unweigerlich auftreten, vollkommen vermieden. Darüber hinaus ist die ätzresistente Abdeckung, die z. B. aus Metall oder Photolack usw. bestehen kann, in der Dampfphase beständiger. Der Ätzvorgang kann außerdem durch die voll oder teilweise durchsichtige Apparatur beobachtet werden.

Die Anmeldung betrifft auch eine Vorrichtung zur Durchführung des Verfahrens nach einem der Ansprüche 7—6, bei der der Ätzkammer eine Schleuse angeschlossen ist, in der die geätzten Platten unmittelbar nach dem Ätzvorgang gespült werden. Dadurch wird eine Gefährdung der Umgebung durch die Dämpfe der Flußsäure vermieden.

Vorzugsweise sind auch Mittel, z. B. ein Ventilator, vorgesehen, die die Gasphase homogenisieren. Auf diese Weise wird immer mehr Gas angeboten, als Gas durch den Ätzvorgang verbraucht wird, so daß immer ein Überschuß an Flußsäuregas vorhanden ist.

Zur Beschleunigung des Verfahrens kann die konzentrierte Flußsäure aufgeheizt werden. Auf diese Weise ist es dann möglich, in einem Ätzvorgang höhere Stückzahlen zu verarbeiten und eine höhere Packungsdichte der Glasplatten in der Ätzkammer zuzulassen.

Nach einer weiteren Lösung der Erfindung kann der gasförmige Fluorwasserstoff durch die Ätzkammer hindurchgeleitet werden. Diese Lösung ermöglicht ein leichteres Arbeiten, da die Ätzkammer abgetrennt und das Flußsäuregas vor der Entnahme der Platten ausgetrieben werden kann. Darüber hinaus wird auf diese Weise eine Abführung der gasförmigen Reaktionsprodukte ermöglicht, so daß keine Verdünnung des Flußsäuregases stattfindet.

Nach einer weiteren zweckmäßigen Ausführung der Erfindung wird die konzentrierte Flußsäure zur Erhöhung des Dampfdruckes und zur Erzielung eines konstanten Dampfdruckes in der Ätzkammer versprüt, ohne daß die Glasplatten dabei direkt besprüht werden. Auf diese Weise wird ein besonders wirtschaftlicher Verfahrensablauf erzielt. Außerdem bietet diese Weiterbildung die Möglichkeit der Abführung der gasförmigen Rekationsprodukte, um eine Verdünnung der Flußsäuregases zu verhindern.

Nach einer weiteren Ausgestaltung der Erfindung werden die Glasplatten im Anschluß an den Ätzvorgang von den Reaktionsprodukten gereinigt. Bei feinen Strukturen verbleiben nämlich feste Reaktionsprodukte in den geätzten Löchern, die durch einen nachfolgenden Reinigungsprozeß zu entfernen sind. Das ist z. B. durch intensives Spülen mit Wasser oder geeigneten Spülflüssigkeiten durchführbar.

### 1. Ausführungsbeispiel:

Auf eine beidseitig mit je 30 nm Titan und 300 nm Kupfer metallisierte Glasplatte von 0,2 mm Dicke wird mit Photolack das Negativbild der für die Steuerplatte erforderlichen Leiterbahnstrukturen erstellt. Die nicht mit Photolack abgedeckten Flächen werden mit 5 $\mu$m Kupfer und 1 $\mu$m Nickel galvanisch verstärkt. Anschließend wird an den Stellen, an denen die Löcher in das Glas zu ätzen sind, der Photolack phototechnisch entfernt und die Kupferschicht abgeätzt. Die Größe der in das Glas zu ätzenden Löcher beträgt ca. 0,16 mm × 0,4 mm, das Lochraster beträgt 0,32 mm × 0,64 mm. Die Glasplatten werden in einer Horde im trockenen Zustand für ca. 15 bis 20 Minuten, je nach gewünschtem Ätzgrad, in die Dampfphase einer 75% Flußsäure bei Atmosphärendruck eingebracht. Während des Glasätzprozesses wird mit Hilfe eines Ventilators für möglichst konstanten Flußsäre-Dampfdruck gesorgt. Nach dem Ätzprozeß werden die Glasplatten kurz abgespült und anhand einer vorgesehenen Testmarke der Ätzvorgang kontrolliert. Die in den geätzten Löchern noch vorhandenen Reaktionsprodukte, wie Calciumfluorid, Alkalihexafluorosilikate usw., werden zweckmäßigerweise mit Hilfe eines Netzmittels mit Wasser herausgespült oder mit Schwefelsäure herausgelöst. Anschließend wird der restliche Photolack entfernt und das zwischen den galvanisch verstärkten Leiterbahnen noch vorhandene Metall (Titan und Kupfer) weggeätzt, um so eine Isolierstrecke zwischen den Leiterbahnen zu erhalten. Für die metallischen Leiterbahnen bleiben noch genügend Haftflächen vorhanden.

### 2. Ausführungsbeispiel:

Auf beidseitig mit je 100 nm Titan und 1000 nm Kupfer metallisierten Glasplatten von 0,3 mm Dicke werden unter Verwendung einer Ätzabdeckung mit Photolack ca. 0,1 mm × 0,3 mm große Flächen von Kupfer freigeätzt; die Rastermaße betragen 0,32 mm bzw. 0,64 mm. Die so präparierten Glasplatten werden anschließend für ca. 25 Minuten der Dampfphase einer 75%igen Flußsäure bei Raumtemperatur und Atmosphärendruck ausgesetzt. Nach dem Ätzen und gründlichem Spülen wird die Photolackschicht abgelöst und die Kupferschicht abgeätzt. Die in den Löchern der Glasplatten noch vorhandenen festen Reaktionsprodukte werden in Wasser mit Hilfe von Ultraschall in ca. 1 Minute entfernt. Diese Glaslochplatten können als Abstandshalter zwischen Steuerplatte und Bildschirm in Plasma-Displays eingesetzt werden. Daher ist es auch nicht erforderlich, daß die noch vorhandene Titan-Schicht auf allen Platten abgeätzt werden muß. Lediglich auf derjenigen Abstandslockplatte, die direkt mit der Steuerplatte in Berührung kommt, ist die Titan-Schicht abzuätzen. Bei der gewählten Ätzzeit von 25 Minuten sind die Löcher in der Glasplatte deutlich größer als 0,1 mm × 0,3 mm. Es verbleibt jedoch ein genügend stabiles Glas–Stützgerüst.

Die Erfindung wird anhand der Figuren erläutert:

Fig. 1 zeigt einen Schnitt durch eine Glaslochplatte, die im Tauchätzverfahren hergestellt wurde und

Fig. 2 einen Schnitt durch eine Glaslochplatte, die nach dem erfindungsgemäßen Verfahren hergestellt wurde.

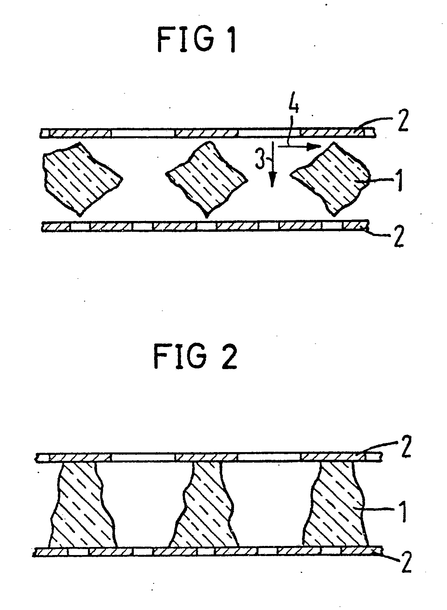

Mit 1 ist in beiden Figuren eine Glasplatte und mit 2 eine resistente Abdeckung bezeichnet. Aus der Fig. 1 ist zu ersehen, daß beim Naßätzverfahren das Verhältnis von Tiefen- zur Seitenätzung wesentlich ungünstiger wird, als es bei dem Verfahren nach der Erfindung der Fall ist. Die Tiefenätzung ist mit einem Pfeil 3 und die Seitenätzung mit einem Pfleil 4 angedeutet. Aus der Fig. 1 geht auch hervor, daß die resistente Abdeckung bereits soweit unterätzt ist, daß sie abhebt und nicht mehr auf dem Glasd haftet.

**Patentansprüche**

1. Verfahren zur Herstellung von Durchbrüchen (Löchern) in Glasplatten, vorzugsweise mit feinsten Strukturen, wie sie insbesondere in Gasentladungsanzeigeelementen benötigt werden, insbesondere in solchen mit hohen Bildpunktdichten, dadurch gekennzeichnet, daß die Durchbrüche in die Glasplatte in einer geschlossenen Apparatur (Ätzkammer) in der Gasphase einer konzentrierten Flußsäure geätzt werden, indem die nicht zu ätzenden Flächen in an sich bekannter Weise mit einer gegen das Ätzmittel Fluorwasserstoff resistenten Abdeckung versehen werden.

2. Verfahren nach Anspruch 1, dadurch gekennzeichnet, daß in die Ätzkammer ein Schutzgas, insbesondere Wasserstoff oder Stickstoff, eingeleitet wird.

3. Verfahren nach Anspruch 1, dadurch gekennzeichnet, daß als Ätzresist eine von Flußsäure (Fluorwasserstoff) nicht angreifbare Metalschicht verwendet wird, wobei zwischen Glasplatte und Resistschicht eine Haftschicht aus Titan vorgesehen wird.

4. Verfahren nach einem der Ansprüche 1 bis 3, dadurch gekennzeichnet, daß der gasförmige Fluorwasserstoff durch die Ätzkammer hindurchgeleitet wird.

5. Verfahren nach einem der Ansprüche 1 bis 3, dadurch gekennzeichnet, daß die konzentrierte Flußsäure zur Erhöhung des Dampfdruckes und zur Erzielung eines konstanten Dampfdruckes in der Ätzkammer versprüht wird, ohne daß die Glasplatten dabei direkt besprüht werden.

6. Verfahren nach einem der Ansprüche 1 bis 5, dadurch gekennzeichnet, daß die Glasplatten im Anschluß an dem Ätzvorgang von den Reaktionsprodukten gereinigt werden.

7. Vorrichtung zur Durchführung des Verfahrens nach einem der Ansprüche 1 bis 6, dadurch gekennzeichnet, daß der Ätzkammer eine Schleuse angeschlossen ist, in der die geätzten Glasplatten unmittelbar nach dem Ätzvorgang gespült werden.

**Claims**

1. Process for the production of openings (holes) in glass plates, preferably having very fine structures such as in particular are required in gas discharge equipment elements, particularly in such elements having high image point densities, characterised in that the openings are etched into the glass plate in a closed apparatus (etching chamber) in the gas phase of a concentrated hydrofluoric acid, the surfaces which are not to be etched being provided in known manner with a covering which is resistant to the etching agent, hydrogen fluoride.

2. Process as claimed in Claim 1, characterised in that a protective gas, particularly hydrogen, or nitrogen, is fed into the etching chamber.

3. Process as claimed in Claim 1, characterised in that a metal layer which is not attacked by hydrofluoric acid (hydrogen fluoride) is used as an etch resist, an adhesive layer consisting of titanium being provided between the glass plate and the resist layer.

4. Process as claimed in one of Claims 1 to 3, characterised in that gaseous hydrogen fluoride is passed through the etching chamber.

5. Process as claimed in one of Claims 1 to 3, characterised in that concentrated hydrofluoric acid is sprayed into the etching chamber to raise the vapour pressure and to obtain a constant vapour pressure, without directly spraying the glass plates.

6. Process as claimed in one of Claims 1 to 5, characterised in that the glass plates are cleansed of the reaction products after the etching process.

7. Apparatus for carrying out a process as claimed in one of Claims 1 to 6, characterised in that the etching chamber is connected to a sluice in which the etched glass plates are rinsed immediately after the etching process.

## 0 003 276

**Revendications**

1. Procédé de préparation de perçages (trous) dans des plaques de verre, de préférence à structures très fines, comme cela est nécessaire notamment dans des éléments d'affichage par décharge dans du gaz, notamment dans de tels éléments ayant des densités élevées de points d'image, caractérisé en ce qu'il consiste à obtenir les perçages ménagés dans la plaque de verre par la phase gazeuse d'un acide fluorhydrique concentré dans un appareil fermé (chambre de décapage) en ne munissant pas, d'une manière en soi connue, les faces à enlever par décapage d'un cache résistant au fluorure d'hydrogène servant d'agent de décapage.

2. Procédé suivant la revendication 1, caractérisé en ce qu'il consiste à envoyer dans la chambre de décapage un gaz protecteur, notamment de l'hydrogène ou de l'azote.

3. Procédé suivant la revendication 1, caractérisé en ce qu'il consiste à utiliser comme substance résistante au décapage une couche métallique ne pouvant pas être attaquée par l'acide fluorhydrique (fluorure d'hydrogène), une couche d'adhérence en titane étant interposée entre la plaque de verre et la couche résistante.

4. Procédé suivant l'une des revendications 1 à 3, caractérisé en ce qu'il consiste à faire passer du fluorure d'hydrogène gazeux dans la chambre de décapage.

5. Procédé suivant l'une des revendications 1 à 3, caractérisé en ce qu'il consiste à envoyer en projection l'acide fluorhydrique concentré afin d'élever la tension de vapeur et d'obtenir une tension de vapeur constante dans la chambre de décapage, sans pour autant le projeter directement sur les plaques de verre.

6. Procédé suivant l'une des revendications 1 à 5, caractérisé en ce qu'il consiste à nettoyer les plaques de verre des produits de réaction à la suite du processus de décapage.

7. Dispositif pour exécuter le procédé suivant l'une des revendications 1 à 6, caractérisé en ce qu'à la chambre de décapage est raccordé un sas, dans lequel les plaques de verre ayant subi le décapage sont rincées immédiatement après le processus de décapage.

# FIG 1

# FIG 2